# EUROPEAN PATENT APPLICATION

(11) **EP 2 498 172 A1**
(43) Date of publication of application: **12.09.2012**
(21) Application number: 10828147.8
(22) Date of filing: 07.09.2010
(51) Int. Cl.: G06F 3/041, G06F 3/023, G06F 3/048, H03M 11/04, H04M 1/247

(54) **MOBILE TERMINAL AND DISPLAY METHOD**

(30) Priority: 04.11.2009 JP 2009252928
(71) Applicant: NEC Corporation, Tokyo 108-8001 (JP)
(72) Inventor: SHIOTA, Naoki, Tokyo 108-8001 (JP)
(74) Representative: Heunemann, Dieter
(86) International application number: PCT/JP2010/065280
(87) International publication number: WO 2011/055587

(57) **Abstract**

A mobile terminal that solves the problem of instability of holding the mobile terminal is provided. Touch coordinate determiner 2 detects a position touched by a user on touch panel 1. Controller 3 displays display information at a corresponding position depending on the touched position detected by touch coordinate determiner 2, the display information indicating that the corresponding position is a position to be held by the user on the mobile terminal.

## Description

### [Technical Field]

The present invention relates to a mobile terminal equipped with a touch panel, and a display method.

### [Background Art]

Mobile terminal such as mobile phone, PHS (Personal Handy-phone Systems), and PDA (Personal Digital Assistants) have been increasingly equipped with a touch panel. A mobile terminal equipped with a touch panel allows a user to perform input to the mobile terminal with a touching operation, i.e., by touching an operation target such as a software keyboard displayed on a screen. Thus, the user can perform operations by touching the screen, which enables intuitive operations.

As techniques for improving the operability in performing input to a mobile terminal equipped with a touch panel while holding the mobile terminal with a user's hands, the mobile terminal described in patent literature 1 and the information processing apparatus described in patent literature 2 have been proposed.

In the techniques described in patent literatures 1 and 2, software keys for text input are displayed in response to a user touching a touch panel, e.g., with the user's thumb. The software keys are displayed within the reach of the right and left thumbs of the user holding predetermined positions on the mobile terminal with both of the user's both hands. This allows the user to perform input only by moving the user's thumbs, thus improving the operability.

Unfortunately, the techniques described in patent literatures 1 and 2 force the user to hold fixed positions on the mobile terminal with the user's hands because the software keys are displayed within the reach of the right and left thumbs of the user holding the predetermined positions on the mobile terminal.

In contrast, patent literature 3 describes an operation device that can meet a user's desire to use a mobile terminal while holding a desired position on the mobile terminal. In this operation device, in response to the user pressing a touch panel, an operation button for performing operations with the user's thumb is displayed around where the user has pressed. Thus, the user can use the mobile terminal while holding a desired position on the mobile terminal.

### [Citation List]

### [Patent Literature]

[Patent Literature 1] JP2006-148536A
[Patent Literature 2] JP2004-355606A
[Patent Literature 3] JP11-164175A

### [Summary of Invention]

### [Technical Problem]

If the positions held by a user on a mobile terminal are not fixed, as in the operation device described in patent literature 3, a problem in which the user is not able to stably hold the mobile terminal occurs depending on the positions in which the user holds the terminal. Especially in the cases of a variable-shape mobile terminal such as a fold-up mobile terminal, or a mobile terminal whose size is larger than normal, holding the mobile terminal in stable position becomes difficult when the user is free to place his/her hands on any part of the mobile terminal.

An object of the present invention is to provide a mobile terminal and a display method that solve the above problem in which the mobile terminal cannot be stably held while the user is free to hold the mobile terminal in any position according to his/her preferences.

### [Solution to Problem]

A mobile terminal according to the present invention includes: a touch panel; a position detector that detects a touched position on the touch panel; and a controller that displays display information at a corresponding position on the touch panel depending on the touched position detected by the position detector, the display information indicating that the corresponding position is a position to be held by a user on the mobile terminal.

A display method according to the present invention is a display method in a mobile terminal equipped with a touch panel, including: detecting a touched position on the touch panel; and displaying display information at a corresponding position on the touch panel depending on the detected touched position, the display information indicating that the corresponding position is a position to be held by a user on the mobile terminal.

### [Effect of Invention]

The present invention allows a mobile terminal to be stably held while the user is free to hold the mobile terminal in any position according to his/her preferences.

### [Brief Description of Drawings]

[Figure 1] Figure 1 is a block diagram showing a configuration of a mobile terminal in a first exemplary embodiment.
[Figure 2A] Figure 2A is a diagram showing an example of display information and a corresponding position.
[Figure 2B] Figure 2B is a diagram showing an example of the display information and the corresponding position.
[Figure 3] Figure 3 is a flowchart for describing an example of operation of the mobile terminal.
[Figure 4] Figure 4 is an external view showing an appearance of a mobile terminal in a second exemplary embodiment.
[Figure 5] Figure 5 is a block diagram showing a configuration of the mobile terminal in the second exemplary embodiment.
[Figure 6A] Figure 6A is a diagram showing an example of a touched position and a corresponding position.
[Figure 6B] Figure 6B is a diagram showing another example of the touched position and the corresponding position.
[Figure 6C] Figure 6C is a diagram showing still another example of the touched position and the corresponding position.
[Figure 7A] Figure 7A is a diagram showing an example of operation keys.
[Figure 7B] Figure 7B is a diagram showing an example of the operation keys.
[Figure 8A] Figure 8A is a diagram for describing an overview of operation of the mobile terminal in the second exemplary embodiment.
[Figure 8B] Figure 8B is a diagram for describing the overview of the operation of the mobile terminal in the second exemplary embodiment.
[Figure 8C] Figure 8C is a diagram for describing the overview of the operation of the mobile terminal in the second exemplary embodiment.
[Figure 9] Figure 9 is a flowchart for describing an example of the operation of the mobile terminal in the second exemplary embodiment.

### [Description of Embodiments]

Exemplary embodiments will be described below with reference to the drawings. In the following description, components providing like functions are given like symbols and may not be described repeatedly.

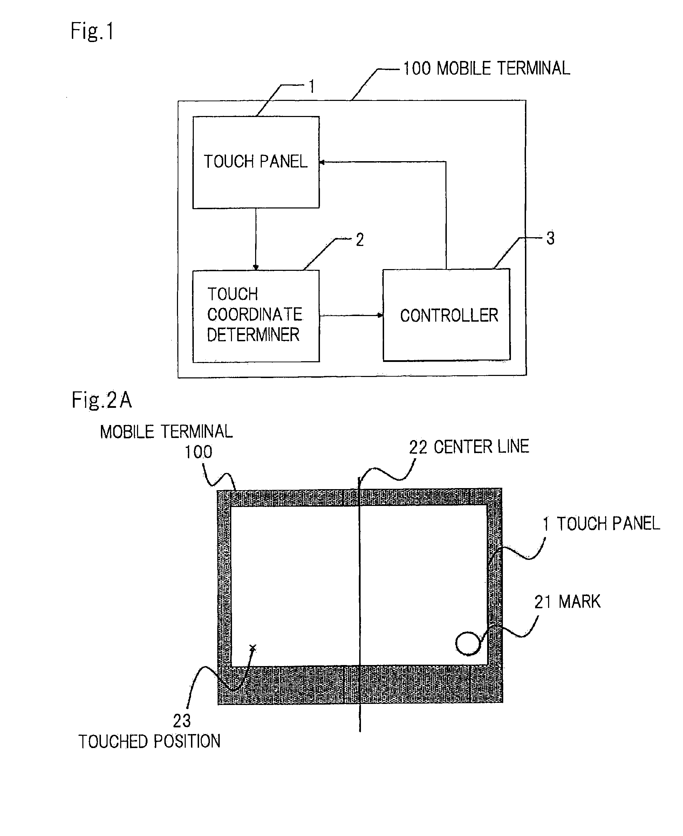

Figure 1 is a block diagram showing a configuration of a mobile terminal in a first exemplary embodiment. In Figure 1, mobile terminal 100 includes touch panel 1, touch coordinate determiner 2, and controller 3. Mobile terminal 100 may be a mobile phone, a PHS, or a PDA.

Touch panel 1 displays various sorts of information such as text and images, and also senses touches on touch panel 1.

Touch coordinate determiner 2 may also be referred to as a position detector. Touch coordinate determiner 2 detects a position on touch panel 1 touched by a user. The touched position is represented as coordinate values in a preset coordinate system on touch panel 1.

Controller 3 displays display information at a corresponding position on touch panel 1 depending on the touched position detected by touch coordinate determiner 2. The display information indicates that the corresponding position is a position to be held by the user on mobile terminal 100.

Specifically, the corresponding position is the position of a fmger of the user's one hand such that the user can stably hold mobile terminal 100 when the user holds mobile terminal 100 while touching the touched position with the thumb of the other hand.

For example, for mobile terminal 100 disposed in landscape orientation, the corresponding position may be a position line-symmetric to the touched position with respect to the lateral center line of mobile terminal 100. For mobile terminal 100 disposed in portrait orientation, the corresponding position may be a position point-symmetric to the touched position with respect to the centroid of mobile terminal 100. These locations of the corresponding position are merely exemplary and not limiting. For example, for mobile terminal 100 disposed in portrait orientation, the corresponding position may be a position somewhat lower than the position point-symmetric to the touched position with respect to the centroid of mobile terminal 100.

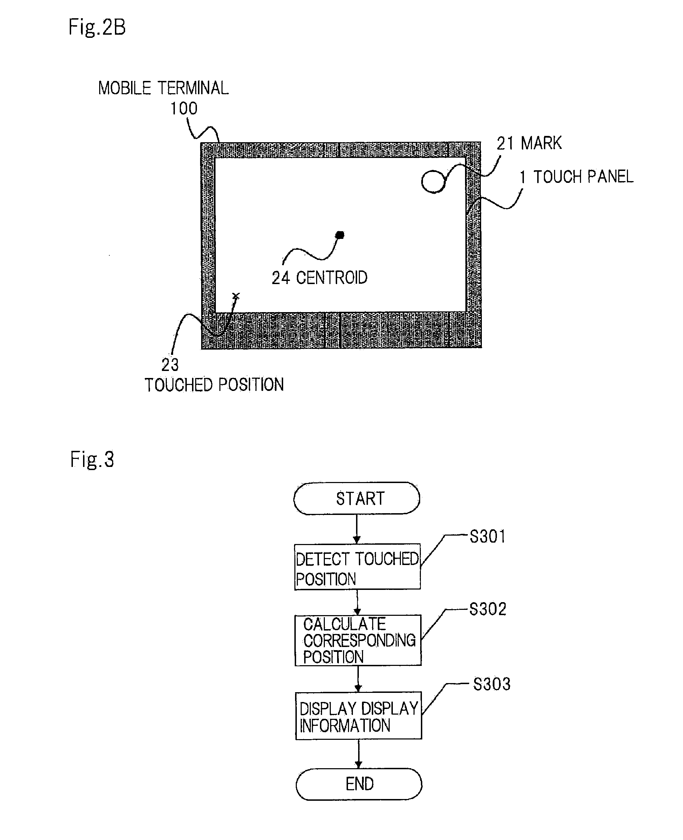

Figures 2A and 2B are diagrams showing examples of the display information and the corresponding position. In Figures 2A and 2B, mark 21 indicating the user's holding position is shown as the display information.

In Figure 2A, mark 21 is displayed at a position line-symmetric to touched position 23 with respect to lateral center line 22 of mobile terminal 100. In Figure 2B, mark 21 is displayed at a position point-symmetric to touched position 23 with respect to centroid 24 of mobile terminal 100.

Next, operation will be described.

Figure 3 is a flowchart for describing an example of operation of mobile terminal 100 in the exemplary embodiment.

In step S301, in response to the user's thumb touching touch panel 1, touch coordinate determiner 2 detects the coordinate values of the touched point as the touched position. Then step S302 is performed.

In step S302, touch coordinate determiner 2 outputs the touched position to controller 3. Controller 3 receives the touched position and calculates the corresponding position on the basis of the touched position.

For example, controller 3 holds the coordinates of the center line or centroid of mobile terminal 100. On the bases of the coordinate values of the center line or centroid and the coordinate values of the touched position indicated by information on the touched position, controller 3 calculates, as the corresponding position, a position line-symmetric to the touched position with respect to the center line of mobile terminal 100, or a position point-symmetric to the touched position with respect to the centroid of mobile terminal 100.

After the corresponding position is calculated, touch coordinate determiner 2 performs step S303.

In step S303, controller 3 generates the display information and displays the display information at the corresponding position on touch panel 1. Then the process terminates.

According to the exemplary embodiment, touch coordinate determiner 2 detects the touched position on touch panel 1 touched by the user. Controller 3 displays the display information at the corresponding position depending on the touched position on touch panel 1 detected by touch coordinate determiner 2. The display information indicates that the corresponding position is a position to be held by the user on mobile terminal 100.

Thus, at the corresponding position depending on the user-touched position, the display information is displayed indicating that the corresponding position is a holding position on mobile terminal 100. Accordingly, if the corresponding position is appropriately set and if the user holds the corresponding position where the display information is displayed, mobile terminal 100 can be stably held while the user is allowed to hold mobile terminal 100 in the user's desired manner.

In the exemplary embodiment, controller 3 sets the corresponding position at the position line-symmetric to the touched position with respect to the center line of mobile terminal 100. This allows mobile terminal 100, disposed in landscape orientation, to be stably held.

Alternatively, in the exemplary embodiment, controller 3 sets the corresponding position at the position point-symmetric to the touched position with respect to the centroid of mobile terminal 100. This allows mobile terminal 100, disposed in portrait orientation, to be stably held.

Next, a second exemplary embodiment will be described.

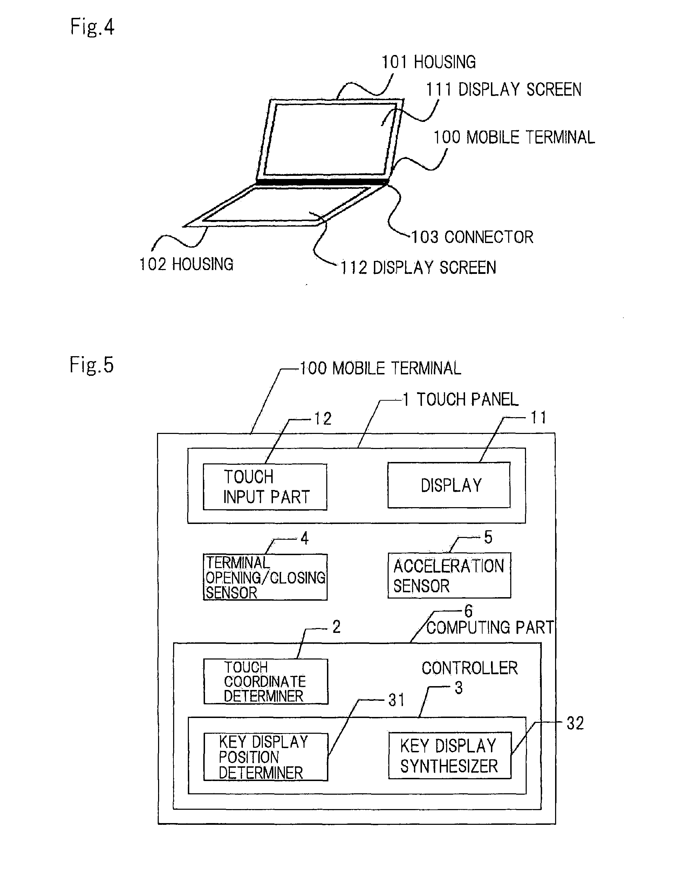

Figure 4 is an external view showing an appearance of a mobile terminal in the exemplary embodiment. In Figure 4, mobile terminal 100 includes two housings 101 and 102 and connector 103.

Housings 101 and 102 are provided with two display screens 111 and 112, respectively.

Connector 103 connects housings 101 and 102 in an openable and closable manner with means such as a hinge mechanism. In Figure 4, connector 103 connects housings 101 and 102 in an openable and closable manner by rotatably connecting housings 101 and 102 around a predetermined axis of rotation.

Figure 5 is a block diagram showing a configuration of the mobile terminal in the exemplary embodiment. In Figure 5, mobile terminal 100 includes touch panel 1, terminal opening/closing sensor 4, acceleration sensor 5, and computing part 6 including touch coordinate determiner 2 and controller 3.

Touch panel 1 includes display 11 and touch input part 12.

Display 11, capable of displaying various sorts of information, displays at least the display position determination button for determining the position of operation keys. In the exemplary embodiment, the display position determination button is used as determination information for determining a position to be held by the user.

Touch input part 12, provided on display 11 to overlap display 11, detects the user's touch on touch input part 12. Alternatively, touch input part 12 may detect when the user is touching input part 12 as the user touches this input part.

Terminal opening/closing sensor 4 may also be referred to as an opening/closing detector. Terminal opening/closing sensor 4 detects the opening/closing state of mobile terminal 100. For example, terminal opening/closing sensor 4 detects the opening/closing angle of mobile terminal 100 as the opening/closing state. Alternatively, terminal opening/closing sensor 4 may detect whether mobile terminal 100 is opened or not as the opening/closing state.

Acceleration sensor 5 may also be referred to as a gravity detector. Acceleration sensor 5 detects the direction of gravity acting on mobile terminal 100.

Touch coordinate determiner 2 in computing part 6 detects, as a touched position on touch panel 1, the end point of a drag operation performed by touch input part 12 for the display position determination button that is displayed on display 11.

Controller 3 includes key display position determiner 31 and key display synthesizer 32.

Key display position determiner 31 may also be referred to as a calculation part. Key display position determiner 31 calculates a corresponding position depending on the touched position detected by touch coordinate determiner 2, on the basis of the opening/closing state detected by terminal opening/closing sensor 4 and on the basis of the direction of gravity detected by acceleration sensor 5.

Specifically, key display position determiner 31 first determines whether or not mobile terminal 100 is disposed in portrait orientation on the basis of the direction of gravity. In the exemplary embodiment, mobile terminal 100 is disposed in portrait orientation if opened housings 101 and 102 are located one above the other, and mobile terminal 100 is disposed in landscape orientation if opened housings 101 and 102 are located side by side.

For example, when housings 101 and 102 are rotatably connected, key display position determiner 31 determines that mobile terminal 100 is disposed in portrait orientation if the direction of the axis of rotation and the direction of gravity are perpendicular to each other, and determines that mobile terminal 100 is disposed in landscape orientation if the direction of the axis of rotation and the direction of gravity are parallel to each other.

If mobile terminal 100 is disposed in landscape orientation, key display position determiner 31 calculates, as the corresponding position, a position line-symmetric to the touched position with respect to the lateral center line of mobile terminal 100.

If mobile terminal 100 is disposed in portrait orientation, key display position determiner 31 calculates the corresponding position on the basis of the opening/closing state.

Specifically, if the opening/closing state indicates that mobile terminal 100 is opened, a position point-symmetric to the touched position with respect to the centroid of mobile terminal 100 is calculated as the corresponding position. If the opening/closing state indicates that mobile terminal 100 is closed, a position point-symmetric to the touched position with respect to the centroid of a display screen including the touched position is calculated as the corresponding position.

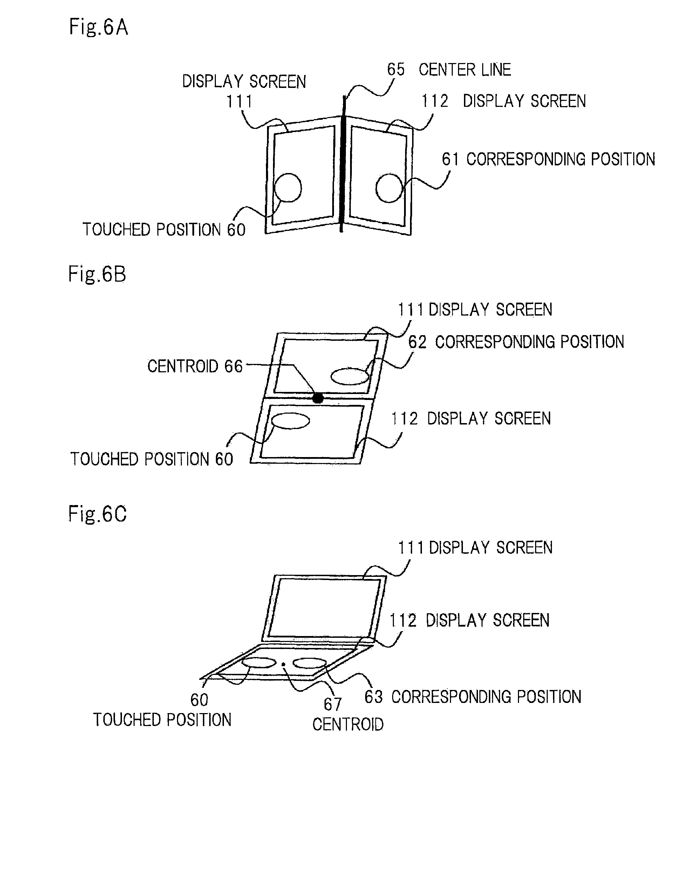

Figures 6A to 6C are diagrams showing examples of the touched position and the corresponding position.

In Figure 6A, mobile terminal 100 is disposed in landscape orientation (i.e., so that housings 101 and 102 are located side by side). Then, corresponding position 61 is point-symmetric to touched position 60 with respect to center line 65 of mobile terminal 100.

In Figure 6B, mobile terminal 100 is disposed in portrait orientation (i.e., so that housings 101 and 102 are located one above the other). Also, mobile terminal 100 is completely opened (i.e., housings 101 and 102 form an angle of 180°). Then, corresponding position 62 is point-symmetric to touched position 60 with respect to centroid 66 of mobile terminal 100.

In Figure 6C, mobile terminal 100 is disposed in portrait orientation. Also, mobile terminal 100 is closed at 90°, i.e., housings 101 and 102 form an angle of 90°. Then, corresponding position 63 is point-symmetric to touched position 60 with respect to centroid 67 of a display screen (display screen 111 in Figure 6C) including touched position 60.

Returning to Figure 5, key display synthesizer 32 may also be referred to as a display controller. Key display synthesizer 32 displays a first operation key section in a touched area including the touched position detected by touch coordinate determiner 2 on display 11. Key display synthesizer 32 also displays a second operation key section as display information in a corresponding area including the corresponding position calculated by key display position determiner 31 on display 11. The first operation key section and the second operation key section may be collectively referred to as operation keys hereinafter.

Thus, since key display position determiner 31 and key display synthesizer 32 are included in controller 3, controller 3 displays the first operation key section in the touched area including the touched position, and displays the second operation key section as the display information in the corresponding area including the corresponding position.

The first operation key section and the second operation key section may be collectively referred to as operation keys hereinafter. If a display image of an application program in execution, for example, is being displayed on display 11, key display synthesizer 32 synthesizes the display image and the operation keys and displays a synthesized image on display 11.

It is desirable to enable the user to perform key input operations using the operation keys while holding mobile terminal 100 with the user's hands. Therefore, the touched area and the corresponding area are desirably set within the reach of the thumbs of the user's hands that are holding mobile terminal 100. In this case, the first operation key section is an operation key section for performing key input operations with the thumb of the user's one hand, and the second operation key section is an operation key section for performing key input operations with the thumb of the user's other hand.

When the user performs key input operations using the operation keys displayed on the touch panel as described above, the user does not receive any tactile responses to touching the operation keys unlike when performing key input operations using a general hardware keyboard. Consequently, the user cannot sense the operation keys when touching them with the user's fingers. The user needs to perform key input operations while looking at the operation keys to check whether or not the user has correctly selected the relevant key.

Therefore, if character keys assigned characters and function keys assigned various functions are uniformly allocated between the first and second operation key sections, the user's line of sight moves between the first and second operation key sections. The frequent movements of the line of sight lead to a reduced input efficiency.

It is therefore desirable that only the first or the second operation key sections includes character keys assigned characters, and remaining the first or second operation key sections include one or more function keys assigned predetermined functions.

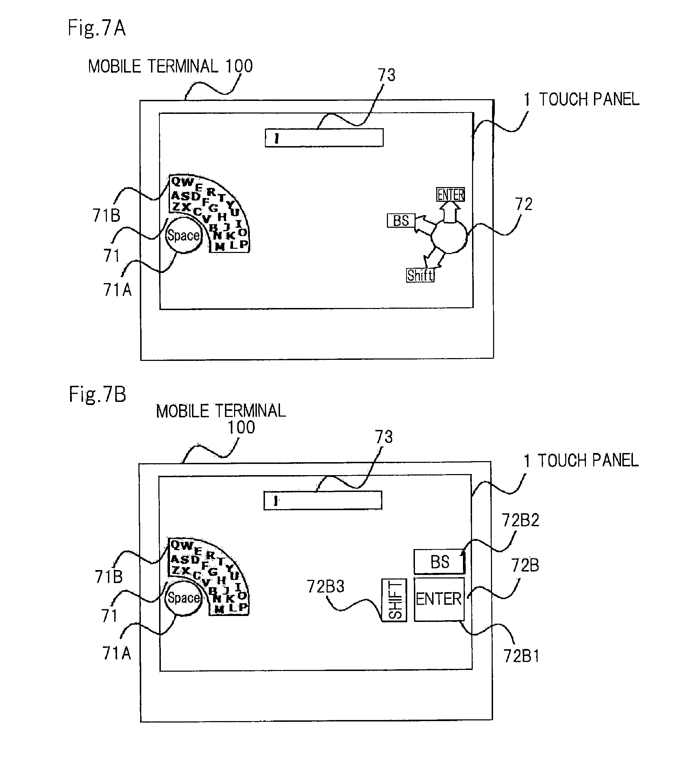

Figure 7A is a diagram showing an example of the operation keys. Figure 7A shows first operation key section 71, second operation key section 72, and input form 73 that are displayed on touch panel 1.

First operation key section 71 includes keys for performing input operations with the thumb of the left hand, including space key 71 A for inputting a space and character keys 71B assigned characters.

Space key 71A is displayed at a position overlapping the touched position.

Character keys 71 B include a plurality of Roman character keys that have been assigned respective Roman characters. The Roman character keys are arranged within easy reach of the thumb of the user's left hand, or more specifically, within a sectorial range centered around the touched position. Keys assigned hiragana or katakana characters may also be used as character keys 71B.

Second operation key section 72 includes an operation key that is not a character key, and it is a function key capable of drag operations. The function key provides functions assigned to respective drag directions of the drag operations. Specifically, second operation key section 72 is used to input an instruction to perform any of the following functions an enter function, a BS (Back Space) function, and a shift function, depending on the drag direction.

The enter function is a function for the user to confirm a character to input. If the user selects the enter function while touching any of character keys 71B with the user's left hand, a character assigned to the touched character key is input to input form 73.

The BS function is a function for deleting a character immediately before a cursor indicating a character input position in input form 73. The shift function is a function typically assigned to a shift key on a general keyboard, and provides, for example, a function of switching the type of a character to be input next to uppercase.

The operation keys shown in Figure 7A are merely exemplary and not limiting. For example, the operation keys may take a form shown in an example in Figure 7B.

Figure 7B shows first operation key section 71, second operation key section 72B, and input form 73 that are displayed on touch panel 1.

Second operation key section 72B includes function keys assigned respective functions. Specifically, second operation key section 72B includes enter key 72B1 assigned the enter function, BS key 72B2 assigned the BS function, and shift key 72B3 assigned the shift function. In response to the user touching any of these function keys, a corresponding function assigned to the touched function key is performed.

Now, operation will be described.

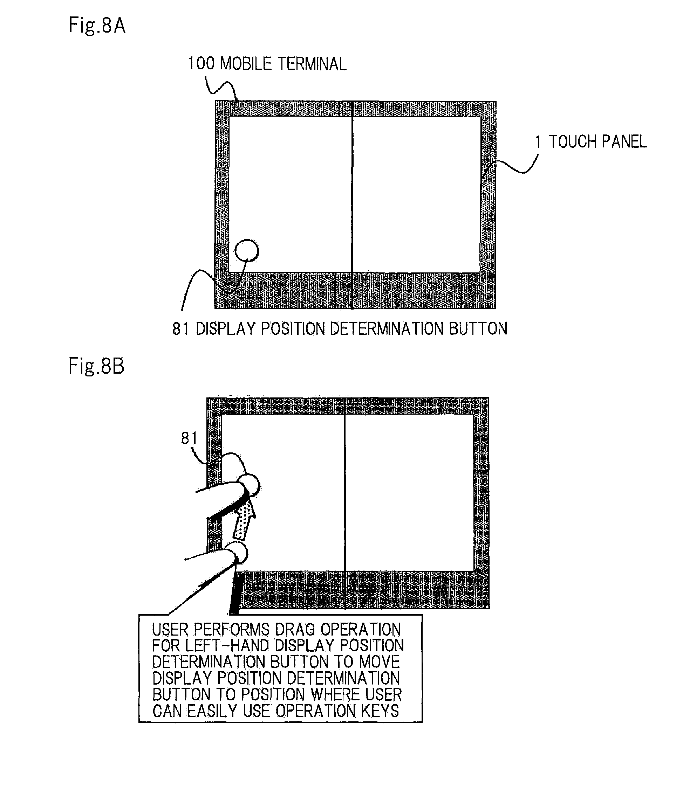

Figures 8A to 8C are diagrams for describing operation of mobile terminal 100 in the exemplary embodiment. It is assumed that the first operation key section is a left-hand key section for performing key input operations with the thumb of the left hand, and the second operation key section is a right-hand key section for performing input operations with the thumb of the right hand. The display screens are located side by side, and the corresponding position is line-symmetric to the touched position with respect to the center line of mobile terminal 100.

First, as shown in Figure 8A, display position determination button 81 is displayed on touch panel 1.

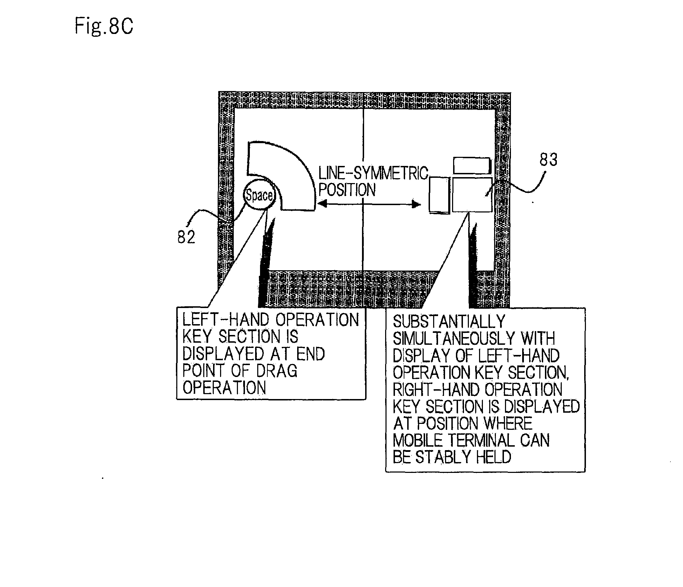

Then, as shown in Figure 8B, the user performs a drag operation to move display position determination button 81 to a position where the user can easily use the first operation key section. When the user finishes the drag operation for display position determination button 81, as shown in Figure 8C, left-hand key section 82 is displayed in the touched area including the touched position, which is the end point of the drag operation, and right-hand key section 83 is displayed in the corresponding area including the corresponding position depending on the touched position.

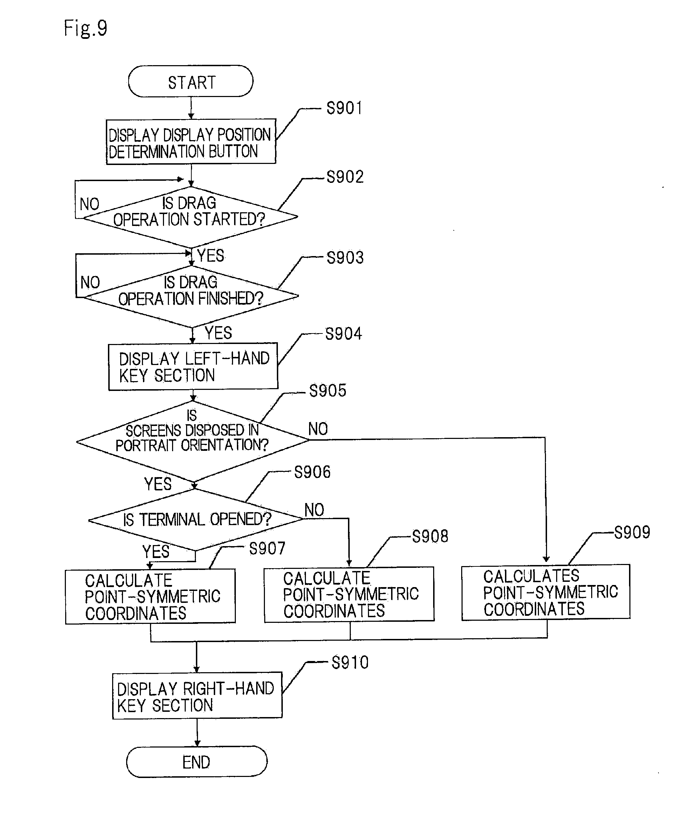

Figure 9 is a flowchart for describing more detailed operation of mobile terminal 100 in the exemplary embodiment. It is assumed below that the first operation key section is the left-hand key section and the second operation key section is the right-hand key section.

In step S901, key display synthesizer 32 of mobile terminal 100 displays the display position determination button at a predetermined button position on display 11 of touch panel 1 with predetermined start timing. The start timing can be appropriately set by a person such as the user or developer of mobile terminal 100. For example, the start timing may be when mobile terminal 100 is activated, when a desired application program is executed, or when the user provides an instruction to display the display position determination button.

Having displayed the display position determination button, key display synthesizer 32 notifies touch coordinate determiner 2 of the predetermined button position. Touch coordinate determiner 2 receives the button position and performs step S902.

In step S902, touch coordinate determiner 2 checks whether or not a drag operation for the display position determination button is started.

More specifically, first, touch coordinate determiner 2 checks whether or not the user touches the button position on touch input part 12.

If the button position is touched, touch coordinate determiner 2 checks whether or not the coordinate values indicating the touched position are continuously changed.

If the coordinate values are continuously changed, touch coordinate determiner 2 determines that a drag operation for the display position determination button is started and notifies key display synthesizer 32 of the changed coordinate values as the moved display position. Touch coordinate determiner 2 then performs step S903. Key display synthesizer 32 receives the moved display position and changes the display position of the display position determination button to the received moved display position.

If the button position is not touched or if the coordinate values are not continuously changed, touch coordinate determiner 2 determines that a drag operation for the display position determination button is not started and performs step S902.

In step S903, each time the coordinate values are changed, touch coordinate determiner 2 notifies key display synthesizer 32 of the changed coordinate values as the moved display position and checks whether the coordinate values are not changed for a predetermined period of time or longer.

If the coordinate values are not changed for the predetermined period of time or longer, touch coordinate determiner 2 determines that the drag operation for the display position determination button is finished, and performs step S904. If the coordinate values are changed within the predetermined period of time, touch coordinate determiner 2 determines that the drag operation for the display position determination button is not finished, and performs step S903.

In step S904, touch coordinate determiner 2 notifies key display position determiner 31 and key display synthesizer 32 of the current coordinate values as the touched position, which is the display position of the left-hand key section. Key display synthesizer 32 receives the touched position and displays the left-hand key section in the touched area including the touched position on display 11. Key display position determiner 31 receives the touched position and performs step S905.

In step S905, key display position determiner 31 checks the direction of gravity detected by acceleration sensor 5. On the basis of the direction of gravity, key display position determiner 31 determines whether or not mobile terminal 100 is disposed in portrait orientation.

For example, key display position determiner 31 holds axis information that indicates the direction of the axis of rotation. Key display position determiner 31 determines whether or not the angle formed by the direction of the axis of rotation indicated by the axis information and the direction of gravity is smaller than a first predetermined angle.

If the angle is smaller than the first predetermined angle, key display position determiner 31 determines that the direction of gravity is perpendicular to the axis of rotation, thereby determining that mobile terminal 100 is disposed in landscape orientation. If the angle is not smaller than the first predetermined angle, key display position determiner 31 determines that the direction of gravity is not perpendicular to the axis of rotation, thereby determining that mobile terminal 100 is disposed in portrait orientation.

If mobile terminal 100 is disposed in portrait orientation, key display position determiner 31 performs step S906. If mobile terminal 100 is disposed in landscape orientation, key display position determiner 31 performs step S910.

In step S906, key display position determiner 31 checks the opening/closing state detected by terminal opening/closing sensor 4. On the basis of the opening/closing state, key display position determiner 31 determines whether or not mobile terminal 100 is opened.

For example, in the case where the opening/closing state is based on the angle formed by housings 101 and 102, key display position determiner 31 determines whether or not the angle is not smaller than a second predetermined angle. If the angle is not smaller than the second predetermined angle, key display position determiner 31 determines that mobile terminal 100 is opened. If the angle is smaller than the predetermined angle, key display position determiner 31 determines that mobile terminal 100 is closed. The second predetermined angle may be 140° or 180°, for example.

If mobile terminal 100 is opened, key display position determiner 31 performs step S907. If mobile terminal 100 is closed, key display position determiner 31 performs step S908.

In step S907, key display position determiner 31 calculates, as the corresponding position, a position point-symmetric to the touched position with respect to the centroid of mobile terminal 100. Key display position determiner 31 notifies key display synthesizer 32 of the corresponding position. Key display synthesizer 32 receives the corresponding position and performs step S910.

In step S908, key display position determiner 31 calculates, as the corresponding position, a position point-symmetric to the touched position with respect to the centroid of the display screen that includes the touched position. Key display position determiner 31 notifies key display synthesizer 32 of the corresponding position. Key display synthesizer 32 receives the corresponding position and performs step S910.

In step S909, key display position determiner 31 calculates, as the corresponding position, a position line-symmetric to the touched position with respect to the lateral center line of mobile terminal 100. Key display position determiner 31 notifies key display synthesizer 32 of the corresponding position. Key display synthesizer 32 receives the corresponding position and performs step S910.

In step S910, key display synthesizer 32 displays the right-hand key section in the corresponding area including the corresponding position on display 11. Then the process terminates.

Thus, as described above, according to the exemplary embodiment, controller 3 displays the first operation key section in the touched area including the touched position. Since the operation keys are displayed at the position held by the user on mobile terminal 100, the user can operate mobile terminal 100 while holding the user's desired position.

In the exemplary embodiment, controller 3 displays the second operation key section as the display information in the corresponding area including the corresponding position. This allows the user to operate the mobile terminal while holding the positions on the mobile terminal where the user can stably holding the mobile terminal, leading to improved stability of mobile terminal 100 that is being operated.

In the exemplary embodiment, the character keys assigned characters are included just in the first or second operation key section. This allows the range of movement of the user's line of sight during text input to be reduced, leading to improved input efficiency.

In the exemplary embodiment, the remaining first or second operation key section not including the character keys is capable of drag operations and includes one or more function keys providing functions assigned to respective drag directions of the drag operations.

This allows performing operations without moving the thumb off the mobile terminal in performing various functions such as backspace, leading to improved stability of mobile terminal 100 that is being operated.

In the exemplary embodiment, acceleration sensor 5 detects the direction of gravity acting on the mobile terminal. On the basis of the direction of gravity detected by acceleration sensor 5, key display position determiner 31 calculates the corresponding position. Key display synthesizer 32 displays the display information at the corresponding position calculated by key display position determiner 31.

Thus, the corresponding position is calculated on the basis of the direction of gravity acting on the mobile terminal. This allows calculating the corresponding position appropriate for stably holding mobile terminal 100 even when the position that facilitates stable holding of mobile terminal 100 changes depending on the manner the user holds mobile terminal 100.

In the exemplary embodiment, terminal opening/closing sensor 4 detects the opening/closing state of housings 101 and 102. Key display position determiner 31 calculates the corresponding position on the basis of the opening/closing state detected by terminal opening/closing sensor 4. Key display synthesizer 32 displays the display information at the corresponding position calculated by key display position determiner 31.

Thus, the corresponding position is calculated on the basis of the opening/closing state of housings 101 and 102. This allows calculating the corresponding position appropriate for stably holding mobile terminal 100 even when the position enabling stable holding of mobile terminal 100 changes depending on the opening/closing state of housings 101 and 102.

In the exemplary embodiment, key display position determiner 31 determines whether or not mobile terminal 100 is disposed in portrait orientation on the basis of the direction of gravity. If mobile terminal 100 is disposed in landscape orientation, key display position determiner 31 calculates, as the corresponding position, the position line-symmetric to the touched position with respect to the lateral center line of mobile terminal 100.

This allows stably holding mobile terminal 100 even when mobile terminal 100 is disposed in landscape orientation.

In the exemplary embodiment, if mobile terminal 100 is opened, key display position determiner 31 calculates, as the corresponding position, the position point-symmetric to the touched position with respect to the centroid of mobile terminal 100. If mobile terminal 100 is closed, key display position determiner 31 calculates, as the corresponding position, the position point-symmetric to the touched position with respect to the centroid of the display screen including the touched position.

This allows stably holding mobile terminal 100 whether mobile terminal 100 is opened or closed.

In the exemplary embodiment, touch panel 1 displays the display position determination button, which is the display information for determining a position to be held by the user. Touch coordinate determiner 2 detects a drag operation for the determination information and detects, as the touched position, the position of the end point of the drag operation for the determination information. This allows the user to determine the holding position of the user's one hand while checking where the user can easily hold.

While the present invention has been described above with reference to the exemplary embodiments, the present invention is not limited to the above exemplary embodiments. Various modifications conceivable by those skilled in the art may be made to the configurations and details of the present invention without departing from the scope of the present invention.

This application claims priority to Japanese patent application No. 2009-252928, filed on November 4, 2009, the disclosure of which is incorporated herein in its entirety.

### [Reference Signs List]

1 touch panel
2 touch coordinate determiner
3 controller
4 terminal opening/closing sensor
5 acceleration sensor
6 computing part
11 display
12 touch input part
31 key display position determiner
32 key display synthesizer
100 mobile terminal

## Claims

1. A display apparatus comprising:
a touch panel;
a position detector that detects a touched position on said touch panel; and
a controller that displays display information at a corresponding position on said touch panel depending on the touched position detected by said position detector, the display information indicating that the corresponding position is a position to be held by a user on the mobile terminal.

2. The mobile terminal according to claim 1, wherein
said controller displays a first operation key section in a touched area including the touched position.

3. The mobile terminal according to claim 1 or 2, wherein
said controller displays, as the display information, a second operation key section in a corresponding area including the corresponding position.

4. The mobile terminal according to claim 1, wherein
said controller displays a first operation key section in a touched area including the touched position and displays, as the display information, a second operation key section in a corresponding area including the corresponding position, and
either the first operation key section or the second operation key section includes character keys assigned characters.

5. The mobile terminal according to claim 4, wherein
remaning first operation key section or the second operation key section not including the character keys is capable of drag operations and includes a function key providing functions assigned to respective drag directions of the drag operations.

6. The mobile terminal according to any one of claims 1 to 5, wherein
said controller sets the corresponding position at a position line-symmetric to the touched position with respect to a center line of the mobile terminal.

7. The mobile terminal according to any one of claims 1 to 5, wherein
said controller sets the corresponding position at a position point-symmetric to the touched position with respect to a centroid of the mobile terminal.

8. The mobile terminal according to any one of claims 1 to 5, further comprising a gravity detector that detects a direction of gravity acting on the mobile terminal, wherein
said controller comprises:
a calculation part that calculates the corresponding position on the basis of the direction of gravity detected by said gravity detector; and
a display controller that displays the display information at the corresponding position calculated by said calculation part.

9. The mobile terminal according to claim 8, wherein
said calculation part determines whether or not the mobile terminal is disposed in portrait orientation on the basis of the direction of gravity and, if the mobile terminal is disposed in landscape orientation, calculates a position line-symmetric to the touched position with respect to a lateral center line of the mobile terminal as the corresponding position.

10. The mobile terminal according to any one of claims 1 to 5, comprising:
two housings;
a connector that connects said housings in an openable and closable manner; and
an opening/closing detector that detects an opening/closing state of the housings, wherein
said touch panel comprises two display screens provided on said housings respectively, and
said controller comprises:
a calculation part that calculates the corresponding position on the basis of the opening/closing state detected by said opening/closing detector; and
a display controller that displays the display information at the corresponding position calculated by said calculation part.

11. The mobile terminal according to claim 10, wherein
if the mobile terminal is opened, said calculation part calculates a position point-symmetric to the touched position with respect to a centroid of the mobile terminal as the corresnonding position and if the mobile terminal is closed, said calculation part calculates a position point-symmetric to the touched position with respect to a centroid of a display screen including the touched position as the corresponding position.

12. The mobile terminal according to claim 10 or 11, further comprising a gravity detector that detects a direction of gravity acting on the mobile terminal, wherein
said calculation part calculates the corresponding position on the basis of the direction of gravity and the opening/closing state.

13. The mobile terminal according to claim 12, wherein
said calculation part determines whether or not the mobile terminal is disposed in portrait orientation on the basis of the direction of gravity and, if the mobile terminal is disposed in landscape orientation, calculates a position line-symmetric to the touched position with respect to a lateral center line of the mobile terminal as the corresponding position, and if the mobile terminal is disposed in portrait orientation, calculates the corresponding position on the basis of the opening/closing state.

14. The mobile terminal according to any one of claims 1 to 13, wherein
said touch panel displays determination information for determining a position to be held by the user, and
said position detector detects a drag operation for the determination information and detects a position of an end point of the drag operation for the determination information as the touched position.

15. A display method in a mobile terminal equipped with a touch panel, comprising:
detecting a touched position on the touch panel; and
displaying display information at a corresponding position on the touch panel depending on the detected touched position, the display information indicating that the corresponding position is a position to be held by a user on the mobile terminal.
